# EUROPEAN PATENT APPLICATION

(11) **EP 3 974 948 A1**
(43) Date of publication of application: **30.03.2022**
(21) Application number: 20197930.9
(22) Date of filing: 23.09.2020
(51) Int. Cl.: G06F 1/3206, G06F 1/3293

(54) **ELECTRONIC CONTROL UNIT FOR A VEHICLE**

(71) Applicant: Kiekert AG, 42579 Heiligenhaus (DE)
(72) Inventor: Mutti, Carlo, 6945 Origlio (CH); Dozio, Paolo, 21100 Varese (IT); Catenazzi, Gian Paolo, 6942 Savosa (CH)
(74) Representative: Michalski Hüttermann & Partner Patentanwälte mbB

(57) **Abstract**

The invention relates to a method for waking up a second microcontroller (3) of an electronic control unit (1) for a vehicle, the electronic control unit (1) comprising a first microcontroller (2) connectable to a plurality of input trigger signals (4), whereby
the second microcontroller (3) is communicatively connected with the first microcontroller (2) via a communication channel (5) and the second microcontroller (3) configured to fall asleep and to be woken up,
the method comprising the steps of:
waking up the second microcontroller (3) by the first microcontroller (2) in response to at least one of the input trigger signals (4);
during the second microcontroller (3) wakes up, monitoring the at least one of the input trigger signals (4) by the first microcontroller (2); and
asking the first microcontroller (2) by the second microcontroller (3) if the at least one of the input trigger signals (4) is confirmed as wakeup event.

## Description

### Technical Field

The invention relates to a method for waking up a microcontroller, MCU, of an electronic control unit, ECU, for a vehicle and connectable to a plurality of input trigger signals, whereby the microcontroller is configured to fall asleep and to be woken up. The invention further relates to an electronic control unit for a vehicle, comprising a microcontroller connectable to a plurality of input trigger signal, whereby the microcontroller is configured to fall asleep and to be woken up.

### Background Art

In existing electronic control unit, ECU, solutions, the design of the electronic control unit is typically composed by the two main components system basic chip, SBC, and microcontroller, MCU, uC or µC, which are interfaced by a serial peripheral interface, SPI. Input trigger signal, triggers, are used as wakeups with a logic such as for example XOR. The ECU often comprise a controller area network transceiver, CAN TRX.

The design of the electronic control unit is limited by the selection of the SBC, as number of input trigger signals are limited resulting in high costs for designs with multiple wakeups. Further, only a few SBCs available on the market have registers to store data in particular after wakeup of the microcontroller, whereas the number of registers are limited. Lastly, it is difficult for said SBCs to stay during asleep below 100 uA of the electronic control unit energy consumption. Also, write-operation in the non-volatile memory of the MCU are limited, in order to avoid memory problems.

Further, for example, AUTOSAR, AUTomotive Open System Architecture, design software of commercial suppliers have specific software components, SWC, in the Basic software, BSW to manage the SBC, for example for SPI, watchdog and CAN TRX, but not regarding wakeup sources. Thus, within 100 ms after occurrence of an input trigger signal and due to the AUTOSAR timing, a "black hole" of up to 50 ms may occur within which the input trigger signal may change, and subsequently maybe be wrongly processed.

### Summary of invention

It is therefore an object of the invention to provide an improved ECU that overcome above described drawbacks. In particular, it is an object of the invention to provide an ECU that is not characterized by such "black hole" and/or always allows a valid processing of the input trigger signal.

The object of the invention is solved by the features of the independent claims. Preferred implementations are detailed in the dependent claims.

Thus, the object is solved by a method for waking up a second microcontroller, MCU 2, of an electronic control unit, ECU, for a vehicle, the electronic control unit comprising a first microcontroller, MCU 1, connectable to a plurality of input trigger signals, whereby
the second microcontroller is communicatively connected with the first microcontroller via a communication channel and the second microcontroller configured to fall asleep and to be woken up,
comprising the steps of:
   waking up the second microcontroller by the first microcontroller in response to at least one of the input trigger signals;
   during the second microcontroller wakes up, monitoring the at least one of the input trigger signals by the first microcontroller; and
   asking the first microcontroller by the second microcontroller if the at least one of the input trigger signals is confirmed as wakeup event, pereferably during the second microcontroller has woken up, and/or has changed during the second microcontroller has woken up for confirming which of the at least two of the input trigger signals constituted a wakeup event or a glitch event.

It is thus a key point of the invention that first microcontroller preferably confirms back to the second microcontroller in response to the request of the second microcontroller if the at least one of the input trigger signals was a "real" wakeup event or a glitch, which does not need to be processed by the second microcontroller. Besides that the SBC is replaced by the first microcontroller such that the electronic control unit comprises two micro-controllers and not a single microcontroller and a SBC as known in prior art. Such way the electronic control unit's printed circuit board assembly comprises less components.

Further, the proposed design with two MCUs instead of a single MCU and a SBC provides increase flexibility, for example allowing flexible number of inputs, resulting in lower costs for designs with many wakeups, allowing to store data in real-time, for example a position of a door actuated by the electronic control unit after wakeup of the MCU. Further, a reduced number of write-operations in the nonvolatile memory of the MCU allows for a longer lifetime of the memory. Summarized in other words, the proposed electronic control unit design with many inputs is more scalable, easy to customize, costs competitive compared to prior art solutions.

Generally, the electronic control unit is an embedded system in automotive electronics that controls one or more of the electrical systems or subsystems in a vehicle. Types of electronic control units may include engine control module, ECM, powertrain control module, PCM, Transmission Control Module, TCM, Brake Control Module, BCM or EBCM, Central Control Module, CCM, Central Timing Module, CTM, General Electronic Module, GEM, Body Control Module, BCM, Suspension Control Module, SCM, control unit, or control module etc.. Further types of electronic control units may include door control unit, DCU, Engine control unit, Electric Power Steering Control Unit, PSCU, Human-machine interface, HMI, Powertrain control module, PCM, Seat Control Unit, Speed control unit, SCU, Telemat-ic control unit, TCU, Transmission control unit, TCU, Brake Control Module, BCM; ABS or ESC, or Battery management system, BMS. One unit may incorporate several of the individual control modules.

The first microcontroller and/or the second microcontroller can be provided as a 8 bit MCU, a 16 bit MCU or a 32 bit MCU. Preferably, the electronic control unit, the first microcontroller and/or the second microcontroller comprise a memory, such as for example SRAM, EEPROM, Flash etc.. The plurality of input trigger signals may comprise digital inputs, analog inputs and/or supply voltage and ground. Further, the electronic control unit, the first microcontroller and/or the second microcontroller may comprise outputs, such as terminals, connectable, among others, to actuator drivers, such as for example injectors, relays, valves etc., H bridge drivers for servomotors, logic outputs and/or analog inputs. Confirmed as wakeup event means for example asking the first microcontroller by the second microcontroller if the at least one of the input trigger signals has changed during the second microcontroller has woken up for confirming if the at least one of the input trigger signals constituted a wakeup event or a glitch event.

Preferably, the first microcontroller is provided as a low power device and/or is able to go in low power mode with a consumption in particular less than 100 uA. For the communicative connection between the two MCUs, each MCU preferably comprises a serial peripheral interface, SPI, interface, an Inter-Integrated Circuit, I2C, interface and/or other electronic interface for exchange data between the MCUs. Preferably, during the second microcontroller wakes up, monitoring all input trigger signals are monitored by the first microcontroller.

Further preferably, the electronic control unit comprises a controller area network, CAN, bus interface device communicatively connected to the first microcontroller and configured for communicating with at least one another electronic control unit of the vehicle. Thereby, the CAN bus interface device is preferably external to the first microcontroller, in particular embodied as a separate device.

Falling asleep means in particular that the second microcontroller is switched off and/or switched in a state consuming significant less energy than during normal operation. Analogously, waking up means in particular that the second microcontroller is switched on and thus operational for processing the at least one of the input trigger signals.

Further preferably, the second microcontroller comprises a basic software, BSW, at least one specific software component, SWC, configured for processing the at least one of the input trigger signals, an application layer and a runtime environment, RTE, interacting with the application layer. The second microcontroller may further comprise an AUTOSAR software architecture including the BSW and the at least one SWC.

The first microcontroller wakes up the second microcontroller in particular if at least one of the input trigger signals changes its state, for example from low to high and/or if at least one of the input trigger signals comprises a rising edge, in particular by sending a wakeup signal via the communication channel. The wakeup time, i.e. the time during which second microcontroller wakes up respectively changes from an asleep state to a fully woken up i.e. operational state, may be a few µs up to 50 µs or up to 100 µs, or even longer. During said wakeup time the first microcontroller monitors if the at least one of the input trigger signals, which triggered waking up of the second microcontroller, changes. Therefore, the first microcontroller may remember the initial state of the at least one of the input trigger signals when triggering the second microcontroller to wake up, for example by storing said state in a memory.

Once the second microcontroller is woken up, second microcontroller asks, in particular via the communication channel, if the at least one of the input trigger signals has changed during the second microcontroller has woken up. Such way before described "black hole" is avoided, within which the at least one of the input trigger signals may have changed. In particular, it is checked if the at least one of the input trigger signals, which triggered the wakeup, stayed in the same logic level, in particular high or low, for at least a configured amount of time. Thereby, the configured amount of time may be 50 ms, 100 ms, or even longer.

In other words, when the wakeup event as at least one of the input trigger signals is received, the second microcontroller is still powered off. The first microcontroller powers on the second microcontroller and the second microcontroller start its boot sequence, during which the second microcontroller has its "black hole". During the boot sequence the at least one of the input signals can change its state without that the second microcontroller can monitor its evolution, as during boot time a microcontroller is still not fully functional. By asking respectively checking and/or comparing if the at least one of the input trigger signals has changed during the second microcontroller has woken up, the first microcontroller can easily confirm if the at least one of the input trigger signals constituted a wakeup event i.e. if the at least one of the input trigger signals has not changed during the wakeup time or if a glitch event happened i.e. if the at least one of the input trigger signals has changed during the wakeup time, being for example a fault signal that has to be discarded.

Preferably, the first microcontroller comprises a firmware configured to communicate with the second microcontroller and/or for handling the plurality of input trigger signals. The second microcontroller may have dedicated SWCs, in particular certified as per Automotive Safety Integrity Level, ASIL-B, which can be configurable by software planning tools, in particular for SPI communication, watchdog, CAN TRX, and/or wakeup sources. The firmware may further be configured to switch off/fall asleep and/or to switch on/wakeup the second microcontroller. Such way the sleep state can be reached for example through a specific command sent on the communication channel from the first microcontroller to second microcontroller. The firmware may further be configurable, in particular by the second microcontroller through the communication channel, to have for each input trigger signal a separated wakeup configuration. Thereby, a wakeup confirmation can be a sort of digital filter that allow the second microcontroller to know how the wakeup signal evolved during the boot time of the second microcontroller.

In a particular preferred implementation, the method comprises the steps of:
waking up the second microcontroller by the first microcontroller in response to at least two of the input trigger signals;
during the second microcontroller wakes up, monitoring the at least two of the input trigger signals by the first microcontroller; and
asking the first microcontroller by the second microcontroller if at least one or all of the at least two of the input trigger signals is confirmed as wakeup event and/or has changed during the second microcontroller has woken up for confirming which of the at least two of the input trigger signals constituted a wakeup event or a glitch event.

In a further preferred implementation said steps refer not only to two input trigger signals but to three, four or more input trigger signals, which may occur in parallel or time-staggered.

According to a preferred implementation, the method comprises the step of:
Confirming by the first microcontroller to the second microcontroller that the at least one of the input trigger signals is a wakeup event satisfying a defined criteria.

In a further preferred implementation, each input trigger signal has its own defined criteria and/or each defined criteria can be configured by the second microcontroller through the communication channel. A wakeup event and/or criteria may be that the input trigger signal has not changed during the wakeup time and/or that the input trigger signal changed from low to high or from high to low.

According to a preferred implementation, the method comprises the step of:
processing the confirmed at least one of the input trigger signals by the second microcontroller.

Processing means in particular that, in response to the at least one of the input trigger signals, the second microcontroller for example actuates a power sliding door. In this respect, the at least one of the input trigger signals may arise from actuating a handle for opening and/or closing said power sliding door.

In an even further preferred implementation, the method comprises the step of:
only processing the at least one of the input trigger signals by the second microcontroller if the at least one of the input trigger signals has not changed during waking up.

In case the at least one of the input trigger signals changed during the wakeup time, the proposed method determines that the at least one of the input trigger signals was in fact a glitch, which then is not processed.

In another preferred implementation, the method comprises the step of:
the second microcontroller falling asleep after a predefined time period and/or
the second microcontroller falling asleep in response to a sleep signal received from the first microcontroller.

Falling asleep means in particular that the second microcontroller is switched off and/or is switched into a sleep state with reduced energy consumption, thereby in any case reducing energy consumption of the electronic control unit.

In an even further preferred implementation, the method comprises the step of:
periodically checking a status change of the input trigger signals by the first microcontroller.

The first microcontroller may check every 10 µs, 20 µs or 30 µs if any of the plurality of input trigger signals has changed, and in response to such change, for example from low to high, wakeup the second microcontroller.

The object is further solved by an electronic control unit, ECU, for a vehicle, comprising
a first microcontroller, MCU 1, connectable to a plurality of input trigger signals and
a second microcontroller, MCU 2, communicatively connected with the first microcontroller via a communication channel, and configured to fall asleep and to be woken up, whereby
the first microcontroller is configured for waking up the second microcontroller in response to at least one of the input trigger signals and, during the second microcontroller wakes up, for monitoring the at least one of the input trigger signals by the first microcontroller, and
the second microcontroller is configured for asking the first microcontroller if the at least one of the input trigger signals is confirmed as wake up event and/or has changed during the second microcontroller has woken up for confirming if the at least one of the input trigger signals constituted a wakeup event or a glitch event.

In a preferred implementation, the first microcontroller is configured for confirming to the second microcontroller which input trigger signal is confirmed as wakeup event.

According to a further preferred implementation, the second microcontroller is configured for processing the at least one of the input trigger signals.

In another preferred implementation, the second microcontroller is configured for only processing the at least one of the input trigger signals by the second microcontroller if the at least one of the input trigger signals is confirmed as wakeup event and/or has not changed.

Further implementations and advantages of the unit are directly and unambiguously derived by the person skilled in the art from the method as described before.

### Brief description of drawings

These and other aspects of the invention will be apparent from and elucidated with reference to the implementation described hereinafter.

In the drawings:

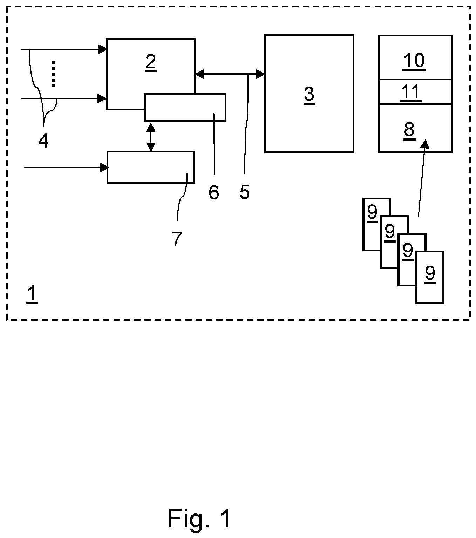

Fig. 1 shows an electronic control unit, ECU, with a first microcontroller, MCU 1, and a second microcontroller, MCU 2, according to a preferred implementation in a schematic view.

### Description of implementations

Fig. 1 shows electronic control unit 1 with a first microcontroller 2 and a second microcontroller 3 according to a preferred implementation in a schematic view.

The electronic control unit 1 is part of a vehicle and controls a power sliding door of the vehicle in response to actuating a handle, not shown. By actuating the handle, a respective input trigger signal of a plurality of input triggers signals 4 connected via respective terminals and/or connectors to the first microcontroller 2 changes for example from low to high.

During normal operation, the first microcontroller 2 is powered on, whereas the second microcontroller 3 is powered down respectively sleeps for reducing overall energy consumption of the electronic control unit 1. The second microcontroller 3 comprises compared to the first microcontroller 2 higher processing power and such wise requires more energy for processing.

Both the first microcontroller 2 and the second microcontroller 3 are connected via a communication channel 5, embodied as a serial peripheral interface, SPI. Such wise both the first microcontroller 2 and the second microcontroller 3 comprise a SPI communication device, not shown.

In response to the at least one of the input trigger signals 4, the first microcontroller 2 sends via the communication channel 5 a wakeup request to the second microcontroller 3. The first microcontroller 2 comprises a firmware 6 which on one side monitors the plurality of input trigger signals 4 in respect to signal changes and on the other sides is configured to wakeup and to communicate with the second microcontroller 3 via said communication channel 5.

For the second microcontroller 3 to wakeup i.e. to change from an asleep state into a fully operational state takes, depending on the type of microcontroller, typically around 50 ms to 100 ms. During said time period the first microcontroller continuously monitors the respective input trigger signal 4 which triggered the first microcontroller 2 to wake up the second microcontroller 3 in respect to a possible change, for example if the respective input trigger signal 4 switches for example back from high to low.

Once the second microcontroller 3 has fully woken up, the second microcontroller 3 asks the first microcontroller 2 via the communication channel 5 if the least one of the input trigger signals 4 that triggered the wakeup has changed during the wakeup time. In case the respective input trigger signal 4 is confirmed and/or has not changed, the input trigger signal 4 constitutes a wakeup event so that the second microcontroller 3 processes the input trigger signal 4, for example actuates a drive of the power sliding door to open or close the power sliding door.

In case the respective input trigger signal 4 is not confirmed and/or has changed during the wakeup time, the respective input trigger signal 4 in fact constitutes a glitch and is not processed. A glitch is thereby understood as faulty signal that is discarded. After the second microcontroller 3 has processed the respective input trigger signal 4, the second microcontroller 3 falls asleep after a predefined time period, the second microcontroller 3 falls asleep in response to a sleep signal received from the first microcontroller 2 or the second microcontroller 3 falls asleep after instructing the first microcontroller 2.

In case more than one input trigger signals 4 trigger the second microcontroller 3 to wake up, the second microcontroller 3 can ask the first microcontroller 2 via the communication channel 5 which of the plural input trigger signals 4 has actually triggered the wake up and if the specific input trigger signal 4 has changed during the wake up time.

The electronic control unit 1 further comprises a controller area network, CAN, bus interface device 7 communicatively connected to the first microcontroller 2 and configured for communicating with at least one another electronic control unit of the vehicle. The CAN bus interface device 7 external to the first microcontroller 2 embodied as a separate device.

The second microcontroller 3 comprises a basic software, BSW, 8, various specific software components, SWC, 9 configured for processing the at least one of the input trigger signals 4, an application layer 10 and a runtime environment, RTE, 11 interacting with the application layer 10. The second microcontroller 3 such comprises an AUTOSAR software architecture including the BSW 8 and the SWCs 9.

While the invention has been illustrated and described in detail in the drawings and foregoing description, such illustration and description are to be considered illustrative or exemplary and not restrictive; the invention is not limited to the dis-closed implementations. Other variations to be disclosed implementations can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

### Reference signs list

- 1: electronic control unit
- 2: first microcontroller
- 3: second microcontroller
- 4: input trigger signals
- 5: communication channel
- 6: firmware
- 7: CAN bus interface device
- 8: basic software, BSW
- 9: specific software components, SWC
- 10: application layer
- 11: runtime environment, RTE

## Claims

1. Method for waking up a second microcontroller (3) of an electronic control unit (1) for a vehicle, the electronic control unit (1) comprising a first microcontroller (2) connectable to a plurality of input trigger signals (4), whereby
the second microcontroller (3) is communicatively connected with the first microcontroller (2) via a communication channel (5) and the second microcontroller (3) configured to fall asleep and to be woken up,
the method comprising the steps of:
waking up the second microcontroller (3) by the first microcontroller (2) in response to at least one of the input trigger signals (4);
during the second microcontroller (3) wakes up, monitoring the at least one of the input trigger signals (4) by the first microcontroller (2); and
asking the first microcontroller (2) by the second microcontroller (3) if the at least one of the input trigger signals (4) is confirmed as wakeup event.

2. Method according to the previous claim, comprising the step of:
Confirming by the first microcontroller (2) to the second microcontroller (3) that the at least one of the input trigger signals (4) is a wakeup event satisfying a defined criteria.

3. Method according to the previous claim, whereby
each input trigger signal (4) has its own defined criteria and/or each defined criteria can be configured by the second microcontroller (3) through the communication channel (5).

4. Method according to any of the previous claims, comprising the step of:
processing the at least one of the input trigger signals (4) by the second microcontroller (3).

5. Method according to the previous claim, comprising the step of:
only processing the at least one of the input trigger signals (4) by the second microcontroller (3) if the at least one of the input trigger signals (4) is confirmed as wakeup event.

6. Method according to any of the previous claims, comprising the step of:
the second microcontroller (3) falling asleep in response to a sleep signal received from the first microcontroller (2).

7. Method according to any of the previous claims, comprising the step of:
periodically checking a status change of the input trigger signals (4) by the first microcontroller (2).

8. Electronic control unit (1) for a vehicle, comprising
a first microcontroller (2) connectable to a plurality of input trigger signals (4) and
a second microcontroller (3) communicatively connected with the first microcontroller (2) via a communication channel (5), and configured to fall asleep and to be woken up, whereby
the first microcontroller (2) is configured for waking up the second microcontroller (3) in response to at least one of the input trigger signals (4) and, during the second microcontroller (3) wakes up, for monitoring the at least one of the input trigger signals (4) by the first microcontroller (2), and
the second microcontroller (3) is configured for asking the first microcontroller (2) if the at least one of the input trigger signals (4) is confirmed as wakeup event.

9. Electronic control unit (1) according to any of the previous electronic control unit (1) claims, whereby the second microcontroller (3) is configured for processing the at least one of the input trigger signals (4).

10. Electronic control unit (1) according to the previous electronic control unit (1) claim, whereby the second microcontroller (3) is configured for only processing the at least one of the input trigger signals (4) by the second microcontroller (3) if the at least one of the input trigger signals (4) has not changed during waking up.
